# EUROPÄISCHE PATENTSCHRIFT

(11) **EP 2 477 780 B1**
(45) Veröffentlichungstag und Bekanntmachung des Hinweises auf die Patenterteilung: **09.11.2016**
(21) Anmeldenummer: 09778508.3
(22) Anmeldetag: 14.09.2009
(51) Int. Cl.: B23K 9/067, B23K 26/14, B23K 26/38, B23K 28/02

(54) **VERFAHREN UND VORRICHTUNG ZUM BEARBEITEN VON WERKSTÜCKEN MIT EINER LASEREINRICHTUNG UND EINER LICHTBOGENEINRICHTUNG**
METHOD AND DEVICE FOR PROCESSING WORKPIECES BY MEANS OF A LASER APPARATUS AND AN ARC APPARATUS
PROCÉDÉ ET DISPOSITIF DE TRAITEMENT DE PIÈCES PRÉSENTANT UN DISPOSITIF LASER ET UN DISPOSITIF À ARC ÉLECTRIQUE

(43) Veröffentlichungstag der Anmeldung: 25.07.2012
(73) Patentinhaber: TRUMPF Werkzeugmaschinen GmbH + Co. KG, 71254 Ditzingen (DE)
(72) Erfinder: WAHL, Eberhard, 73235 Weilheim (DE); SZELAGOWSKI, Arnd, 73230 Kirchheim unter Teck (DE); STUTE, Uwe, 31535 neustadt am Rübenberge (DE)
(74) Vertreter: Mammel und Maser
(86) Internationale Anmeldenummer: PCT/EP2009/006634
(87) Internationale Veröffentlichungsnummer: WO 2011/029462

(56) Entgegenhaltungen:
- JP-A- 59 133 983
- JP-A- 60 234 782
- JP-A- 2001 205 465
- SU-A1- 1 815 085
- US-A- 5 705 785
- US-A1- 2005 284 853
- US-B1- 6 191 386

## Beschreibung

Die Erfindung betrifft ein Verfahren und eine Vorrichtung zur Bearbeitung von Werkstücken mit einer Lasereinrichtung und einer Lichtbogeneinrichtung gemäß dem Oberbegriff des Ansprüche 1 und 9 (siehe, z.B., JP 59 - 133 983 A), bei welchen ein Laserstrahl und ein Lichtbogen auf eine Bearbeitungsstelle zum Bearbeiten des Werkstückes zugeführt wird.

Aus der DE 201 01 452 U1 ist eine Bearbeitungsvorrichtung für ein Werkstück bekannt, welche eine Lasereinrichtung und eine Lichtbogeneinrichtung aufweist. Durch die Lichtbogeneinrichtung wird ein Lichtbogen auf die Bearbeitungsstelle des Werkstückes gerichtet. Von einer Lasereinrichtung wird über eine Fokussiereinrichtung ein Laserstrahl auf den Fußpunkt des Lichtbogens am Werkstück gerichtet, so dass diese sich am Werkstück treffen. Der Lichtbogen wird dabei durch den Laserstrahl geführt, wobei sich der Laserstrahl mit einer eigenen steuerbaren Kinematic gegenüber dem Lichtbogen bewegt und dadurch den Lichtbogen In die gewünschte Position führt und gegebenenfalls ablenkt. Der Lichtbogen folgt dem aufgrund der Laserstrahlbewegung wandernden Fußpunkt bzw. im Auftreffpunkt des Laserstrahls auf dem Werkstück. Somit kann der Lichtbogen entsprechend genau zum Werkstück positioniert und gelenkt werden. Insbesondere kann dadurch ein Pendelschweißen erzielt werden.

Aus der JP 59-133 983 A ist eine Laserbearbeitungsvorrichtung bekannt, welche eine Lasereinrichtung und eine Lichtbogeneinrichtung aufweist. Ein Laserstrahl der Lasereinrichtung wird auf ein Werkstück gerichtet, wobei de Laserstrahl über eine Fokussierlinse fokussiert und durch eine Elektrode hindurchgeführt wird, bevor dieser auf das zu bearbeitende Werkstück auftrifft. An der Lichtbogeneinrichtung wird ein Plasmagas zusammen mit einem Lasergas gemischt und einer Plasmadüse zugeführt, welche die Elektrode umgibt. Der Laserstrahl wird innerhalb des Piasmastrahls geführt, um das Werkzeug durch Schneiden oder dergleichen zu hearbeiten.

Aus der JP 60-234 782 A geht eine Laserstrahlbearbeitungsvorrichtung hervor, bei welcher ein fokussierter Laserstrahl durch eine Elektrode hindurchgeführt wird. Diese Elektrode wird von einer Düse umgeben, über welche Plasmagas zugeführt wird. Diese Düse ist wassergekühlt. Analoges geht aus der SU 1 815 085 A1 hervor.

Aus der US 6,191 386 B1 geht des Weiteren eine Vorrichtung hervor, bei der ein Laserstrahl zur Bearbeitung auf ein Werkstück gerichtet wird. Dabei wird der Laserstrahl durch ein vorbestimmtes Gas geführt, welches schwingungsanregbare Moleküle umfasst, um einen bestimmten Lichtbogen auszubilden.

Aus der US 2005/0284853 A geht ein Lichtbogenschweißverfahren hervor, bei welchem ein elektrischer Lichtbogen zwischen einer abschmelzenden Elektrode und einem zu bearbeitenden Werkstück erzeugt wird. Dabei Ist vorgesehen, dass die Spitze der Elektrode beziehungsweise des Schweißstrahls an dem Werkstück anliegt. Benachbart hierzu wird ein Laserstrahl zur Spitze des Schweißdrahtes positioniert.

Die JP 2001-205465 offenbart ein Lichtbogenschweißverfahren, bei welchem ein zwischen der Elektrode und dem Werkstück gebildeter Lichtbogen vorauseilend einen Laserstrahl als Führungsstrahl und dem Lichtbogen nacheilend ein Laserstrahl als Nachfolgestrahl vorgesehen ist. Sowohl der vorauseilende als auch der nacheilende Laserstrahl sind jeweils zum Auftreffpunkt des Lichtbogens auf der Bearbeitungsstelle des Werkstückes beabstandet.

Aufgrund ständig steigender Anforderungen an die Bearbeitung von Materialien bezüglich deren Genauigkeit als auch bezüglich der Bearbeitungsgeschwindigkeit bzw. Verkürzung von Prozesszeiten ist es erforderlich, solche bekannten Technologien weiterzuentwickeln.

Der Erfindung liegt deshalb die Aufgabe zugrunde, ein Verfahren und eine Vorrichtung zum Bearbeiten von Werkstücken mit einer Lasereinrichtung und einer Lichtbogeneinrichtung zu schaffen, wodurch eine Erhöhung einer Leistungsdichte in einem Plasmagasstrahl zur Erhöhung der Energieeinbringung zur Bearbeitung von Werkstücken ermöglicht wird.

Diese Aufgabe wird durch ein Verfahren zum Bearbeiten von Werkstücken gemäß Anspruch 1 gelost, bei dem eine Steuerung die Lasereinrichtung und Lichtbogeneinrichtung ansteuert und bei dem durch den Laserstrahl im Plasmastrahl der Kanal eine kontrollierte Erhöhung der Leitfählgkeit des Plasmastrahls erzielt wird und der Lichtbogen oder der Plasmastrahl zum Schneidet verwendet wird. Der Laserstrahl wird unmittelbar vor dem Auftreffen des Plasmagasstrahles der Lichtbogeneinrichtung auf die Bearbeitungsstelle des Werkstückes von außen an den Plasmagasstrahl herangeführt und schneidet den Plasmagasstrahl. Dadurch wird innerhalb des Plasmagasstrahles ein Kanal durch den Laserstrahl geschaffen, der eine kontrollierte Erhöhung der Leitfähigkeit des Plasmagasstrahles bewirkt. Durch diese Erhöhung der Leitfähigkeit wird gleichzeitig auch eine Erhöhung des Lichtbogenstromes erzielt, wodurch ein erhöhter Energieeintrag aufgrund geringerer Verluste beziehungsweise eines verringerten Widerstandes für den Lichtbogenstrom gegeben ist.

Dieses Verfahren ermöglicht insbesondere ein Abtragen von Material mit einem Lichtbogen innerhalb eines laserinduzierten Plasmas. Dieses Abtragen kann sowohl eine Oberflächenbearbeitung von verschiedenen Materialien wie Metall, Glas, Keramik oder dgl. umfassen als auch ein Trennen oder Schneiden von solchen Materialien, insbesondere von Blechen. Ebenso kann auch ein Schweißen von Materialien möglich sein. Durch die Stabilisierung und Führung des Lichtbogens innerhalb des Kanals, der durch der Laserstrahl im Plasmagasstrahl erzeugt wird, kann auch ein Fügen von verschiedenen Stählen und Aluminium ermöglicht werden. Gleichzeitig ist eine geringere Materialzerstörung und eine höhere Präzision und höhere Geschwindigkeit in der Bearbeitung ermöglicht.

Des Weiteren wird bevorzugt durch den Laserstrahl innerhalb des Plasmagesstrahles die Konzentration des ionisierten Gases entlang des Laserstrahlvieges erhöht. Mittels des Lasers wird ein Plasmakanal gezündet. Plasma wird als vierter Aggregatzustand verstanden, bei dem das Gas einen extrem hohen energetischen Zustand aufweist (Ionisation). Es ist damit elektrisch leitend. Durch diese zusätzlich hochenergetischen Atome steigt die Konzentration bzw. Energie im Plasmagasstrahl.

Die Erhöhung der Leitfähigkeit ist sowohl durch die Generierung von Plasma durch den Laserstrahl, als auch durch die Erzeugung eines angeregten Zustandes der Gasmoleküle (opto-galvanischer Effekt) möglich, bei dem die zusätzliche Energie zur Ionisierung reduziert ist.

Durch den Strahldurchmesser des Laserstrahles wird bevorzugt ein Durchmesser des Kanals im Plasmagasstrahl zur Einschnürung des Lichtbogens für die Bearbeitung der Werkstücke eingestellt. Dadurch können verschiedene Prozessparameter gesteuert werden, so dass in Abhängigkeit der zur Bearbeitung anstehenden Aufgaben der Strahldurchmesser des Laserstrahles variiert werden kann. Die Größe bzw. der Durchmesser des durch den Laser aufgebauten Plasmakanals bestimmt den Durchmesser des Plasmagasstrahls. Durch Änderung des Plasmakanals mittels Variation des Laserstrahls infolge Rohstrahländerungen kann der Plasmagasstrahl gezielt manipuliert werden. Hierdurch ergibt sich die Möglichkeit, je nach Anwendung (Oberflächenbearbeitung, Schneiden, Schweißen, etc.) die optimalsten Prozessparameter einzustellen. Die Breite des Plasmakanals bestimmt die Schnittfugenbreite und damit die Schnittgeschwindigkeit. Beim Schweißen lässt sich der notwendige Durchmesser des Arbeitspunktes zur Überlappung gezielt einstellen.

Der Laserstrahl wird bevorzugt mit einem Fokuspunkt zu einer Elektrode der Lichtbogeneinrichtung eingestellt, so dass der Fokuspunkt an der Elektrode oder zwischen der Elektrode und der Bearbeitungsstelle am oder im Werkstück liegt. Dadurch kann die Erhöhung der Leitfähigkeit und somit der Stromfluss des Lichtbogens beeinflusst und innerhalb des Plasmastrahls konzentriert werden. Gleichzeitig kann der Energieabtrag in Abhangigkeit des Bearbeitungsprozesses entsprechend angesteuert werden. Alternativ kann auch vorgesehen sein, dass der Fokuspunkt unterhalb das zu bearbeitenden Werkstückes liegt.

Des Weiteren ist bevorzugt vorgesehen, dass der Plasmagasstrahl von einem Hüllgas eingehüllt ist. Dadurch kann eine Kontamination mit der Umgebung verringert werden. Des Weiteren kann eine bessere Formung des Plasmagasstrahles erzielt werden.

Ein wicht ger Vorteil des Lasereinsatzes ist in der verbesserten Zündfähigkeit beim Prozessstart zu sehen. Insbesondere kann durch eine gezielte Auswahl des Plasma- und des Hüllgases in Bezug auf die Absorptionselgenschaften die Prozessführung verbessert werden.

Zur besonders wirksamen Bearbeitung von Werkstücken ist vorgesehen, dass der Plasmagasstrahl senkrecht auf die Bearbeitungsstelle des Werkstückes zugeführt wird. Dadurch wird ein maximaler Energieeintrag erzielt. G eichzeitig kann ein Austreiben des Materials aus einem Schnittspalt erzielt werden. Der Plasmagasstrahl unterstützt dabei die Ablation des durch den Lichtbogen aufgeheizten Materials.

Eine weitere bevorzugte Ausgestaltung des Verfahrens sieht vor, dass in der Kombination des Laserstrahles der Laserstrahleinrichtung und des Lichtbogens der Lichtbogeneinrichtung die Lichtbogenspannung oder der Lichtbogenstrom geregelt und überwacht werden können. Dies ermöglicht eine gezielte Bearbeitung von Materialien, wie beispielsweise dem Schweißen oder dem Schneiden als auch dem teilweisen Abtragen, insbesondere dem Gravieren oder Einbringen von Konturen in ein Werkstück. In heutigen Schweißquellen wird bereits der Zusammenhang zwischen Lichtbogenspannung oder -strom und Abstand als Regelgröße genutzt. Eir e Überwachung dieser Größe kann damit sowohl zur Abstandsregelung als auch zur Leistungsregelung eingesetzt werden. Hierdurch ergibt sich die Möglichkeit einer geregelten Bearbeitung unter optimalen Bedingungen.

Die Aufgabe wird erfindungsgemäß durch eine Vorrichtung zur Aufnahme von Werkstücken für einen Bearbeitungsvorgang im Werkstück gemäß Anspruch 9 gelöst, bei der ein Bearbeitungskopf vorgesehen, durch den ein Plasmagasstrahl von der Lichtbogeneinrichtung zur Bearbeitungsstelle des Werkstückes ausgerichtet ist und ein oder mehrere Laserstrahlen der Lasereinrichtung von außen an dem Flasmagasstrahl unmittelbar vor der Bearbeitungsstelle angrenzen und diesen schneiden. Dadurch kann innerhalb des Plasmagasstrahles ein Kanal zur Erhöhung der Leitfählgkeit des Plasmagasstrahls erzielt werden, wodurch wiederum eine gezielte Führung des Lichtbogens ermöglicht wird. Bei dieser Ausführungsform kann insbesondere vorgesehen sein, dass mehrere Laserstrahlen unmittelbar vor der Bearbeitungsstelle auf en angrenzend angeordnet sind, wodurch durch die Laserstrahlen eine Verengung des Plasmagasstrahles erzielt und eine Aufweitung verhindeit wird.

Eine weitere bevorzugte Ausgestaltung der Vorrichtung sieht vor, dass in dem Bearbeitungskopf der zur Bearbeitungsstelle geführte Laserstrahl und eine Elektrode der Lichtbogeneinrichtung ortsfest zueinander geführt sind. Dies ermöglicht eine einfache Ansteuerung der Lasereinrichtung und Lichtbogeneinrichtung bezüglich der Führung entlang einer Bearbeitungsstet e arm oder im Werkstück. Dadurch wird sichergestellt, dass immer gleiche Verhältnisse bezüglich der Erzeugung des Kanals im Plasmagasstrahl durch den Laserstrahl gegeben sind.

Bevorzugt wird der Bearbeltungskopf durch einen ein- oder mehrachstgen Manipulator insbesondere Roboters bewegt. Dadurch kann eine flexible Einsatzbereitschaft gegeben sein.

Alternativ kann vorgesehen werden, dass der Bearbeitungskopf nach Art eines Scanners oberhalb dem Werkstück zu dessen Bearbeitung bewegt wird. Dazu kann der Bearbeitungskopf bevorzugt in X- und Y-Richtung entlang dem auf einer Werkstückauflage aufnehmenden Werkstück verfahrba und vorzugsweise in Z-Richtung bewegbar oder zumindest um eine der drei Raumachsen schwenkbar angeordnet. Eine solche Ausgestaltung ermöglicht, dass der Bearbeitungskopf beispielsweise in bestehende Konfigurationen einer Laserflachbettschneidmaschine eingesetzt werden kann. Darüber hinaus kann ein solcher Bearbeitungskopf auch für vieltere bestehende Laserschneidmaschinen eingesetzt werden, welche ein ein- oder mehrachsiges Linearachsensystem aufweisen. Die für den Laserstrahl vorgesehenen Anschlüsse und Strahlführungskomponenten können dabei verwendet werden.

Des Weiteren ist bevorzugt vorgesehen, dass die Elektrode der Lichtbogeneinricttung als Ringelektrode ausgebildet ist und innerhalb einer zentralen Öffnung der Elektrode ein Laserstrahl durchführbar angeordnet ist. Diese Anordnung weist einen konstruktiv einfachen Aufbau auf. Darüber hinaus kann ein schneller und einfacher Austausch solcher Ringelektroden, die Verschleißteile sind, vorgesehen sein.

Eine bevoizugte Ausgestaltung des Bearbeitungskopfes sieht vor, dass dieser eine Düsenöffnung aufweist, welcher zur Formung des Plasmagasstrahles dient und dass innerhalb dieser Düsenöffnung eine Elektrode der Licthbogeneinrichtung vorgesehen Ist. Dabei ist bevorzugt vorgesehen, dass außerhalb der Düsenöffnung ein oder mehrere Laserstrahlen entlang geführt werden. Dieser Bearbeitungskopf kann koaxial zur Düsenöffnung für den Plasmagasstrahl eine Düsenöffnung zur Ausgabe eines Hüllgases umfassen, welches den Plasmagasstrahl umgibt, wodurch eine vorzeitige Aufweitung des Plasmagasstrahles verhindert wird.

Nach einer weiteren bevorzugten Ausgestaltung des Bearbeitungskopfes kann vorgesehen sein, dass die Elektrode der Lichtbogeneirichtung an eine Düsenöffnung angrenzt oder innerhalb dieser Düsenöffnung liegt, so dass das Plasmagas die Elektrode vollständig umströmt und dass vorzugsweise in Strömungsrichtung des Plasmagasstrahles gesehen die Düsenöffnung für das Hüllgas nach dem Austritt des Plasmagases aus seiner Düsenöffnung liegt. Dadurch kann eine vollständige Umhüllung des Plasmagasstrahles sichergestellt werden.

Nach einer weiteren alternativen Ausgestaltung der Vorrichtung ist vorgesehen, dass die Zuführung von einem oder mehreren Laserstrahlen von außen zum Plasmagasstrahl zur Erzeugung des Kanals in einem spitzen Winkel zwischen dem Plasmagasstrahl und dem oder den Laserstrahlen mit einem gemeinsamen Schnittpunkt in der Bearbeitungsstelle oder vor der Bearbeitungsstelle von weniger als 15° vorzugsweise weniger 10° und insbesondere weniger als 5° aufweist. Dadurch kann einer Aufweitung des Plasmagasstrahles entgegengewirkt werden. Gleichzeitig kann vor dem Auftreffen auf die Bearbeitungsstelle ein Kanal Im Plasmagasstrahl gebildet werden, um die Leitfähigkeit zu erhöhen und die Führung des Lichtbogens zu gewährieisten.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht einer Vorrichtung zum Bearbeiten von Werkstücken,
- Figur 2: eine schematische Seitenansicht eines ersten Beispiels eines Bearbeitungskopfes der Vorrichtung gemäß Figur 1,
- Figur 3: eine schematische Schnittansicht eines zweiten Beispiels zu Figur 2 und
- Figur 4: eine weitere schematische Schnittansicht einer Anordnung einer Lasereinrichtung und Lichtbogeneinrichtung gemäß der Erfindung, zur Bildung des Bearbeitungskopfes.

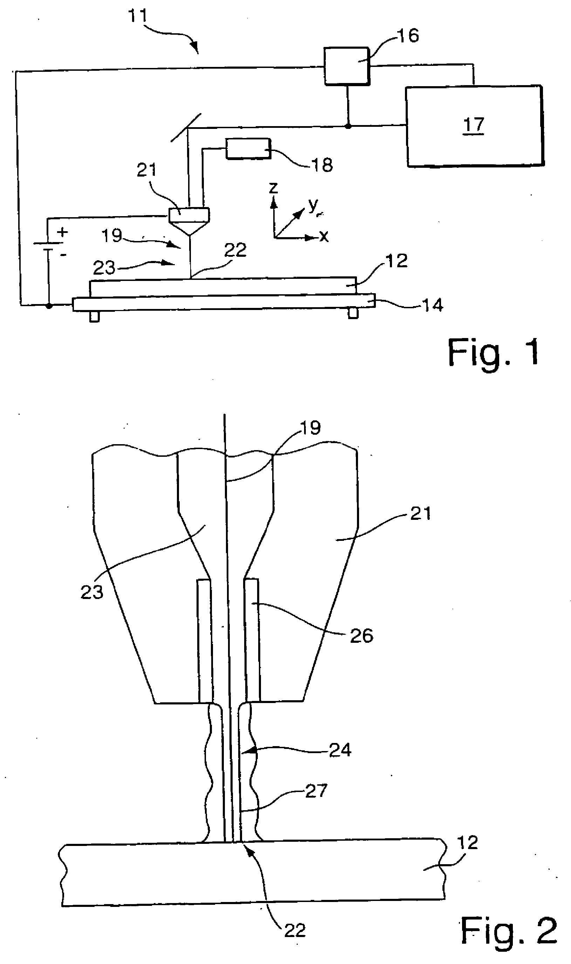

In Figur 1 ist schematisch eine Vorrichtung 11 zur Aufnahme eines plattenförmigen Werkstückes 12 auf einer Werkstückauflage 14 dargestellt. Auf dieser Werkstückauflage 14 werden bevorzugt platten- oder tafelförmige Werkstücke 12 zur anschließenden Bearbeitung durch die Vorrichtung 11 aufgelegt. Die Vorrichtung 11 umfasst eine Steuerung 16, welche zur Ansteuerung einer Lasereinrichtung 17 und einer Lichtbogeneinrichtung 18 vorgesehen ist. Durch die Lasereinrichtung 17 wird ein Laserstrahl 19 erzeugt, der über ein nicht näher dargestelltes Strahlführungssystem einem Bearbeitungskopf 21 zugeführt und von dort aus auf eine Bearbeitungsstelle 22 am oder im Werkstück 12 gerichtet ist. Durch die Lichtbogeneinrichtung 18 wird ein Plasmagasstrahl 23 erzeugt, der ebenfalls über den Bearbeitungskopf 21 zur Bearbeitungsstelle 22 geführt wird. Innerhalb des Plasmagasstrahles 23 wird ein Lichtbogen 24 geführt, der der Bearbeitungsstelle 22 zugeführt wird.

Zur Bearbeitung des Werkstückes 12 kann vorgesehen sein, dass der Bearbeitungskopf 21 zumindest in X- und Y-Richtung oberhalb des auf der Werkstücknahme 14 aufliegenden Werkstückes 12 verfahrbar durch ein Linearachsensystem oder eine Handhabungseinrichtung vorgesehen sein. Darüber hinaus kann der Bearbeitungskopf 21 vorzugsweise in Z-Richtung bewegbar und/oder um zumindest eine der drei Raumachsen schwenkbar aufgenommen sein. Bevorzugt werden mehrachsige Linear-systeme oder Handhabungseinrichtungen, wie beispielsweise Roboter, eingesetzt. Alternativ kann vorgesehen sein, dass der Bearbeitungskopf 18 feststehend vorgesehen ist oder nur in der Z-Achse verfahrbar ist und die Werkstückaufnahme 14 in X- und Y-Richtung zur Bearbeitung bewegt wird.

Durch die Ausgestaltung der Vorrichtung 11 mit einer Lasereinrichtung 17 und einer Lichtbogeneinrichtung 18 wird eine Bearbeitung des Werkstückes mit einem laserinduzierten Plasma beziehungsweise einem in einem Kanal des Plasmagasstrahles 23 geführten Lichtbogen 24 erzeugt, wobei der Kanal durch den Laserstrahl 19 gebildet wird. Hierfür ist bevorzugt das Werkstück 12 als negative Elektrode ausgebildet und der Bearbeitungskopf als positive Elektrode. Anwendungsspezifisch kann dies auch vertauscht sein. Die Lasereinrichtung 17 kann dabei beispielsweise CO₂-Laser oder UV-Laser verwenden. Als vorteilhaft erweisen sich auch Kurzpulslaser, sowie Laser mit langen Pulsdauern. Ebenso sind Diodenlaser oder Faser- bzw. Scheibenlaser einsetzbar.

In den nachfolgenden Figuren 2 bis 4 werden einzelne Beispiele die nicht Teil der Erfindung sind oder Anordnungen gemäß der Erfindung zum Aufbau und Bildung eines Bearbeitungskopfes 21 näher beschrieben.

In Figur 2 ist ein schematische Schnittansicht des Bearbeitungskopfes 21 dargestellt, bei welchem ein Laserstrahl 19 zentral durch den Bearbeitungskopf 21 hindurchgeführt und auf die Bearbeitungsstelle 22 gerichtet wird. Koaxial zum Laserstrahl 19 wird der Plasmagasstrahl 23 geführt, wobei der Laserstrahl 19 und der Plasmagasstrahl 23 durch eine Elektrode 26, insbesondere Ringelektrode 26 hindurchgeführt wurden. Durch die koaxiale Anordnung des Laserstrahles 19 innerhalb des Plasmagasstrahles 23 wird ein Kanal 27 gebildet, innerhalb dem das ionisierte Plasmagas eine erhöhte Leitfähigkeit aufweist, um einen Lichtbogen 24 zur Bearbeitungsstelle 22 zu führen.

Durch die ringförmige Elektrode 26 wird der Plasmagasstrom eingeengt und geformt. Durch den vorzugsweise koaxial dazu geführten Laserstrahl 19 wird eine Stützung des Fußpunktes beziehungsweise des Auftreffpunktes des Plasmagasstrahles 23 an der Bearbeitungsstelle 22 ermöglicht. Bei einer solchen Ausführungsform kann beispielsweise ein Hüllgas entfallen, so dass eine vereinfachte Ausgestaltung des Bearbeitungskopfes ermöglicht ist.

Der dem Bearbeitungskopf 21 zugeführte Plasmagasstrahl 23 besteht beispielsweise aus einatomigen Argon und/oder zweiatomigen Gasen, wie Wasserstoff, Stickstoff oder Sauerstoff, die ionisiert sind. Ebenso kann als Plasmagasstrahl ionisierte Luft eingesetzt werden. Insbesondere kann durch eine gezielte Auswahl der Hüllgases in Bezug auf die Absorptionseigenschaften die Prozessführung verbessert werden.

Die Ringelektrode 26 beziehungsweise deren Längsachse der Austrittsöffnung steht bevorzugt senkrecht zum flächigen Werkstück 12 beziehungsweise zu dessen Erstreckungsebene in X- und Y-Richtung. Die Ringelektrode 26 ist dabei bevorzugt als austauschbare Ringelektrode an dem Bearbeitungskopf 21 angeordnet und weist insbesondere eine düsenförmige Austrittsöffnung auf.

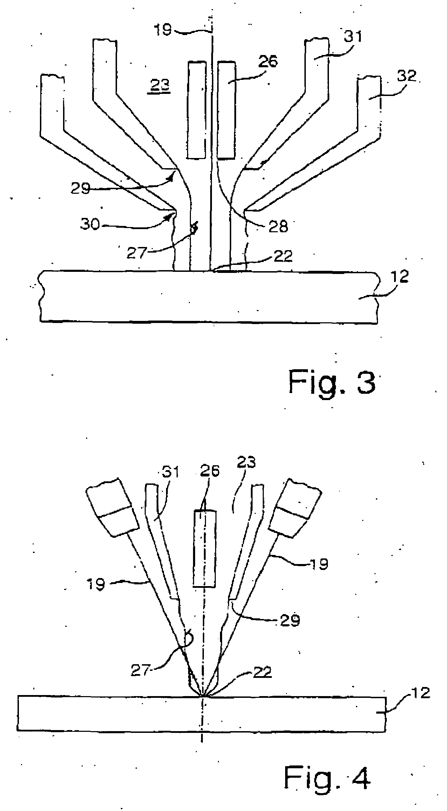

In Figur 3 ist schematisch ein alternatives Beispiel des Bearbeitungskopfes 21 im Schnitt dargestellt. Eine Ringelektrode 26 liegt mit ihrer Öffnung 28 innerhalb einer Düsenöffnung 29 einer Plasmagasdüse 31, welche wiederum innerhalb einer Düsenöffnung 30 einer Hüllgasdüse 32 liegt. Der Laserstrahl 19 wird wiederum koaxial durch die Ringelektrode 26 hindurchgeführt und auf die Bearbeitungsstelle 22 gerichtet. Die Plasmagasdüse 31 engt das zugeführte Plasmagas zur Bildung des Plasmagasstrahles durch die Düsenöffnung 29 ein. Anschließend wird der Plasmagasstrahl 23 durch die Hüllgasdüse 32 mit Hüllgas umhüllt. Diese Ausgestaltung weist analoge Vorteile wie die Ausführungsform gemäß der Figur 2 auf. Zusätzlich wird der Plasmagasstrahl innerhalb dem Hüllstrahl geführt. Dadurch kann eine Bündelung des Plasmagasstrahles 23 aufrechterhalten bleiben. Darüber hinaus kann der Laserstrahl 19 wieder eine Fokussierung des Kanals 27 bewirken, wodurch der Lichtbogen 24 ebenfalls auf die Bearbeitungsstelle 22 fokussiert wird.

In Figur 4 ist schematisch eine Ausführungsform des Bearbeitungskopfes 21 gemäß der Erfindung im Schnitt zu den Figuren 2 und 3 dargestellt. Bei dieser Anordnung ist vorgesehen, dass die Elektrode 26 stab- oder stiftförmig ausgebildet ist und innerhalb der Plasmagasdüse 31 angeordnet ist, wobei durch die Plasmagasdüse 31 der Plasmagasstrahl zunächst geformt wird und in Richtung auf die Bearbeitungsstelle 22 austritt. Außerhalb der Plasmagasdüse 31 werden ein oder mehrere Laserstrahlen 19 in Richtung auf die Bearbeitungsstelle 22 gerichtet. Bevorzugt schneidet der oder die Laserstrahlen 19 vor dem Auftreffen auf der Bear-beitungsstelle den Plasmagasstrahl 23, so dass wiederum ein Kanal 22 zur Erhöhung der Leitfähigkeit des Plasmagases gebildet wird, um den Lichtbogen 29 zu lenken und zu führen. Die Zuführung der Laserstrahlen 19 erfolgt vorzugsweise in einem Winkel von weniger als 15° geneigt zur Vertikalen, welche die Zuführachse den Plasmagasstrahl bildet. Vorzugsweise ist ein Winkel von weniger als 10° und insbesondere von weniger als 5° vorgesehen. Dadurch kann ein großer Überlappungsbereich vor der Bearbeitungsstelle 22 zwischen dem oder den Laserstrahlen 19 oder dem Plasmagasstrahl 23 erzielt werden.

Zur Bearbeitung des Werkstückes 12, insbesondere zum Trennen des Werkstückes 12, ist bevorzugt vorgesehen, dass zunächst für den Beginn eines solchen Trenn- oder Schneidprozess ein sogenannter Pilotbogen zwischen der Plasmagasdüse 31 und einer Elektrode 26 mittels Hochspannung gezündet. Dieser Pilotbogen führt zu einer Ionisation zwischen der Plasmagasdüse 31 und dem Werkstück 12, wodurch ein Zünden des Lichtbogens 24 eingeleitet und der Pilotbogen ausgeschalten wird. Somit brennt der Plasmagasstrahl 23 zwischen der Elektrode 26 und dem Werkstück 12. Im Plasmagasstrahl 23 wird eine Entladungsstrecke durch den vom Laserstrahl 19 erzeugten Kanal 27 definiert, durch den der Lichtbogen 26 geführt wird und eine Materialablation erzielt werden kann. Des Weiteren wird durch diese Materialbearbeitung, insbesondere Materialabtrag, eine exakte Kantenkontur erzielt. Durch den zum Schneidspalt geführten Plasmagasstrahl 23 kann ein gezieltes Ausbringen des abgetragenen Materials erfolgen. Zusätzlich kann hier eine Absaugung unterstützend wirken. Während der Bearbeitung des Werkstückes 12 ist es bevorzugt vorgesehen, die zeitliche Übereinstimmung des Laserstrahls 19 und einer Maximalspannung der Elektroden 26 zu optimieren und gemeinsam anzusteuern. Dies könnte durch ein gemeinsames Basissignal erfolgen, welches identisch sowohl für die Stärkung der Prozessenergie einer Lasereinrichtung 17 als auch für die Verstärkung der Prozessenergie der Elektrode 26 verwendet wird. In Abhängigkeit der Bearbeitungsaufgaben kann die Lage des Fokuspunktes des Laserstrahles 19 direkt unterhalb der Elektrode 26 liegen, so dass nur eine geringe Aufweitung des Laserstrahles 19 und des Kanals 27 im Plasmagasstrahl 23 erfolgt. Ebenso kann der Fokuspunkt zwischen der Elektrode und dem Werkstück 12, aber auch unterhalb des Werkstückes 12, liegen. Des Weiteren ist beim Plasmaschneiden ausreichend bekannt, dass der Zündvorgang des Plasmagasstrahls beim Einstechen ein enormes Verschleißen der Elektrode als auch der Düsen und Düsenkappe bewirkt. Durch den mittels Laser erzielten Plasmakanal ist bereits ein hohes Energieniveau im Gas vorhanden, so dass für den Zündvorgang weniger Energie benötigt wird, wodurch eine Schonung der Elektrode und damit ein reduzierter Verschleiß erzielt werden kann.

## Patentansprüche

1. Verfahren zum Bearbeiten von Werkstücken (12) mit einer Lasereinrichtung (17) und einer Lichtbogeneinrichtung (18),
- bei welchem zwischen der Lichtbogeneinrichtung (18) und einer Bearbeitungsstelle (22) am Werkstück (12) ein Plasmagasstrahl (23) von der Lichtbogeneinrichtung (18) auf die Bearbeitungsstelle (22) zugeführt und ein Lichtbogen (24) zwischen einer Elektrode (26) und dem Werkstück (12) erzeugt wird,
- bei dem durch die Lasereinrichtung (17) ein Laserstrahl (19) auf das Werkstück gerichtet wird,
**dadurch gekennzeichnet,**
- **dass** der Laserstrahl (19) unmittelbar vor dem Auftreffen eines durch die Lichtbogeneinrichtung (18) erzeugten Plasmagasstrahles (23) auf der Bearbeitungsstelle (22) des Werkstücks (12) von außen an den Plasmagasstrahl (23) herangeführt wird und den Plasmagasstrahl (23) schneidet,
- **dass** eine Steuerung (16) zur Ansteuerung der Lasereinrichtung (17) und der Lichtbogeneinrichtung (18) vorgesehen ist, und durch den Laserstrahl (19) im Plasmagasstrahl (23) der Kanal (27) zur kontrollierten Erhöhung der Leitfähigkeit des Plasmagasstrahles (23) gebildet wird,
- **dass** der Lichtbogen (24) oder der Plasmagasstrahl (23) zum Schneiden verwendet wird.

2. Verfahren nach Anspruch 1, **dadurch gekennzeichnet, dass** durch den Laserstrahl (19) innerhalb des Plasmagasstrahles (23) die Konzentration des ionisierten Gases entlang des Laserstrahlweges erhöht wird.

3. Verfahren nach Anspruch 1, **dadurch gekennzeichnet, dass** durch den Strahldurchmesser des Laserstrahles (19) ein Durchmesser des Kanals im Plasmagasstrahl (23) zur Einschnürung des Lichtbogens für die Bearbeitung des Werkstücks (12) eingestellt wird.

4. Verfahren nach Anspruch 1, **dadurch gekennzeichnet, dass** der Laserstrahl (19) mit einem Fokuspunkt zu einer Elektrode (26) der Lichtbogeneinrichtung (18) eingestellt wird, der an der Elektrode (26) oder zwischen der Elektrode (26) und der Bearbeitungsstelle (22) am oder im Werkstück (12) liegt.

5. Verfahren nach Anspruch 1, **dadurch gekennzeichnet, dass** der Plasmagasstrahl (23) von einem Hüllgas eingehüllt wird.

6. Verfahren nach Anspruch 1, **dadurch gekennzeichnet, dass** der Plasmagasstrahl (23) senkrecht auf die Bearbeitungsstelle (22) des Werkstücks (12) zugeführt wird.

7. Verfahren nach Anspruch 1, **dadurch gekennzeichnet, dass** durch die Kombination des Laserstrahls (17) der Lasereinrichtung (17) und des Lichtbogens (24) der Lichtbogeneinrichtung (18) die Lichtbogenspannung oder der Lichtbogenstrom oder beides geregelt und überwacht wird.

8. Verfahren nach Anspruch 1, **dadurch gekennzeichnet, dass** der Laserstrahl (19) als Zündhilfe für den Start des Lichtbogens (24) oder des Plasmagasstrahls (23) eingesetzt wird.

9. Vorrichtung zur Aufnahme von Werkstücken für einen Bearbeitungsvorgang im Werkstück (12) zur Durchführung des Verfahrens gemäß einem der Ansprüche 1 bis 8, mit einer Bearbeitungseinrichtung, die eine Lasereinrichtung (17) und eine Lichtbogeneinrichtung (18) umfasst, wobei
- wenigstens ein Bearbeitungskopf (21) vorgesehen ist, durch den ein Plasmagasstrahl von der Lichtbogeneinrichtung (18) zur Bearbeitungsstelle (22) des Werkstücks (12) ausgerichtet ist, und **dadurch gekennzeichnet,**
- **dass** die Lasereinrichtung (17) ein oder mehrere Laserstrahlen so erzeugt, dass in Verwendung des oder der Laserstrahlen (19) der Lasereinrichtung (17) von außen an den Plasmagasstrahl (23) unmittelbar vor der Bearbeitungsstelle (22) angrenzend und diesen schneidend zur Bearbeitungsstelle (22) geführt ist oder sind und
- **dass** der Laserstrahl (19) in dem Plasmagasstrahl (23) einen Kanal zur Erhöhung der Leitfähigkeit des Plasmagasstrahles (23) ausbildet.

10. Vorrichtung nach Anspruch 9, **dadurch gekennzeichnet, dass** in dem Bearbeitungskopf (21) der zur Bearbeitungsstelle (22) geführte Laserstrahl (19) und die Elektrode (26) der Lichtbogeneinrichtung (18) ortsfest zueinander angeordnet sind.

11. Vorrichtung nach Anspruch 9, **dadurch gekennzeichnet, dass** der Bearbeitungskopf (21) durch einen ein- oder mehrachsigen Manipulator bewegbar ist und vorzugsweise der Bearbeitungskopf (21) in x- und y-Richtung entlang dem auf einer Werkstückaufnahme (14) aufliegenden Werkstück (12) verfahrbar ist und insbesondere in z-Richtung bewegbar oder um zumindest eine der drei Raumachsen schwenkbar aufgenommen ist.

12. Vorrichtung nach Anspruch 9, **dadurch gekennzeichnet, dass** die Elektrode (26) der Lichtbogeneinrichtung (18) an eine Düsenöffnung (29) angrenzend oder innerhalb der Düsenöffnung (29) der Plasmagasdüse angeordnet ist und vorzugsweise die Düsenöffnung (29) des Plasmagasstrahles (23) innerhalb der Düsenöffnung (30) des Hüllgases angeordnet ist.

13. Vorrichtung nach Anspruch 9, **dadurch gekennzeichnet, dass** der Bearbeitungskopf (21) eine den Plasmagasstrahl (23) bildende Düsenöffnung (29) benachbart zur Öffnung (28) der Elektrode (26) der Lichtbogeneinrichtung (18) aufweist, welche insbesondere durch die Ringelektrode ausgebildet ist, und bevorzugt koaxial zur Düsenöffnung (29) des Plasmagasstrahles (23) eine Hüllgasdüse (32) zur Ausgabe eines Hüllgases vorgesehen ist.

14. Vorrichtung nach Anspruch 9, **dadurch gekennzeichnet, dass** die Zuführung von dem einen oder mehreren Laserstrahlen (19) von außen zum Plasmagasstrahl (23) zur Erzeugung des Kanals in einem spitzen Winkel zwischen dem Plasmagasstrahl (23) und dem oder den Laserstrahlen (19) mit einem gemeinsamen Schnittpunkt in der Bearbeitungsstelle (22) von weniger als 15°, vorzugsweise als weniger als 10° und insbesondere weniger als 5°, vorgesehen ist.

## Claims

1. A process for machining work pieces (12) with a laser apparatus (17) and an electric arc apparatus (18),
- in which between the electric arc apparatus (18) and a machined spot (22) on the work piece (12) a plasma gas jet (23) is guided to the machined spot (22) and an electric arc (24) is generated between the electric (26) and the work piece (12)
- in which a laser beam (19) is guided with the laser apparatus (17) to the work piece, **characterised in that**
- directly before the plasma gas jet (23) generated by the electric arc apparatus (18) reaches the machined spot (22) of the work piece (12), the laser beam (19) is guided from outside to the plasma gas jet (23) and cuts the plasma gas jet (23)
- that a control system (16) is provided for controlling the laser apparatus (17) and the electric arc apparatus (18) and the channel is formed by the laser beam (19) in the plasma gas jet (23) for increasing the conductivity of the plasma gas jet (23) in a controlled manner,
- that the electric arc (24) or plasma gas jet (23) is used for cutting.

2. The process according to Claim 1, **characterised in that** through the laser beam (19) within the plasma gas jet (23) the concentration of the ionised gas is increased along the laser beam path.

3. The process according to Claim 1, **characterised in that** through the diameter of the laser beam (19) a diameter of the channel inside the plasma gas jet (23) for the constriction of the electric arc is set for machining the work piece (12).

4. The process according to Claim 1, **characterised in that** the laser beam (19) is set with a focal point on an electrode (26) of the electric arc apparatus (18), which lies on the electrode (26) or between the electrode (26) and the machined spot (22) on or inside the work piece (12).

5. The process according to Claim 1, **characterised in that** the plasma gas jet (23) is surrounded by a shielding gas.

6. The process according to Claim 1, **characterised in that** the plasma gas jet (23) is fed perpendicularly onto the machined spot (22) of the work piece (12).

7. The process according to Claim 1, **characterised in that** through the combination of the laser beam (17) of the laser apparatus (17) and the electric arc (24) of the electric arc apparatus (18) the electric arc voltage or the electric arc current or both is regulated and monitored.

8. The process according to Claim 1, **characterised in that** the laser beam (19) is used as an ignition aid for starting the electric arc (24) or plasma gas jet (23).

9. The device for mounting work pieces for a machining process in work piece (12), for executing the process in accordance with one of the Claims 1 to 8, with a machining device that comprises a laser apparatus (17) and an electric arc apparatus (18), wherein:
- at least a machining head (21) is provided, through which a plasma gas jet is aligned from the electric arc apparatus (18) to the machined spot (22) of the work piece (12), and **characterised in**
- **that** the laser apparatus (17) generates one or several laser beams (19), so the laser beam or the laser beams (19) is or are guided from outside to the plasma gas jet (23) directly in front of the machining spot (22) adjacent and cutting the same and
- **that** the laser beam (19) in the plasma gas jet (23) forms a channel for increasing the conductivity of the plasma gas jet (23).

10. The device according to Claim 9, **characterised in that** in the machining head (21), the laser beam (19) fed to the machined spot (22) and the electrode (26) of the electric arc apparatus (18) are stationary relative to one another.

11. The device according to Claim 9 **characterised in that** the machining head (21) is movable by means of a single- or multi-axial manipulator and in particular the machining head (21) is movable in x- and y-direction along the work piece (12) laid on a work piece mounting (14) and is preferably movable in z-direction or is pivotally mounted about at least one of the three spatial axes.

12. The device according to Claim 9, **characterised in that** the electrode (26) of the electric arc apparatus (18) is disposed adjacent to a nozzle opening (29) or within the nozzle opening (29) of the plasma gas nozzle and preferably the nozzle opening (29) of the plasma gas jet (23) is disposed within the nozzle opening (30) of the shielding gas.

13. The device according to Claim 9, **characterised in that** the machining head (21) features a nozzle opening (29), neighbouring to an opening (28) of the electrode (26) of the electric arc apparatus (18), forming the plasma gas jet (23), which is particularly formed by the annular electrode, and a shielding nozzle (32) for issuing a shielding gas is preferably coaxial to the nozzle opening (29) of the plasma gas jet (23).

14. The device according to Claim 9, **characterised in that** the feed of one or several laser beams (19) from the outside to the plasma gas jet (23) for the creation of the channel is provided at an acute angle between the plasma gas jet (23) and one or several laser beams (19) with a common intersection in the machined spot (22) of less. than 15°, preferably less than 10° and in particular less than 5°.

## Revendications

1. Procédé destiné à l'usinage de pièces à usiner (12) à l'aide d'une installation laser (17) et d'une installation à arc électrique (18),
- lors duquel entre l'installation à arc électrique (18) et un point d'usinage (22) situé sur la pièce à usiner (12), un jet de gaz plasmagène (23) jaillit de l'installation à arc électrique (18) sur ledit point d'usinage (22) et un arc électrique (24) est généré entre une électrode (26) et la pièce à usiner (12),
- lors duquel un rayon laser (19) est dirigé par l'installation laser (17) sur la pièce à usiner,
**caractérisé en ce que**
- le rayon laser (19) est amené par l'extérieur jusqu'au jet de gaz plasmagène (23) et coupe ledit jet de gaz plasmagène (23) juste devant l'endroit où un jet de gaz plasmagène (23) généré par l'installation à arc électrique (18) atteint le point d'usinage (22) de la pièce à usiner (12),
- une commande (16) est prévue en vue d'activer l'installation laser (17) et l'installation à arc électrique (18), et **en ce que** le rayon laser (19) forme, dans le jet de gaz plasmagène (23), le canal (27) destiné à augmenter de manière contrôlée la conductivité du jet de gaz plasmagène (23),
- l'arc électrique (24) ou le jet de gaz plasmagène (23) est utilisé pour la coupe.

2. Procédé selon la revendication 1, **caractérisé en ce que** le rayon laser (19) augmente, à l'intérieur du jet de gaz plasmagène (23), la concentration du gaz ionisé le long du trajet emprunté par le rayon laser.

3. Procédé selon la revendication 1, **caractérisé en ce que** le diamètre de rayon du rayon laser (19) permet de régler un diamètre du canal dans le jet de gaz plasmagène (23) en vue de rétrécir l'arc électrique pour l'usinage de la pièce à usiner (12).

4. Procédé selon la revendication 1, **caractérisé en ce que** le rayon laser (19) est réglé avec un point focal donné par rapport à une électrode (26) de l'installation à arc électrique (18), lequel se situe au niveau de l'électrode (26) ou entre l'électrode (26) et le point d'usinage (22) situé sur ou dans la pièce à usiner (12).

5. Procédé selon la revendication 1, **caractérisé en ce que** le jet de gaz plasmagène (23) est entouré d'un gaz enveloppe.

6. Procédé selon la revendication 1, **caractérisé en ce que** le jet de gaz plasmagène (23) est conduit de manière à arriver perpendiculairement sur le point d'usinage (22) de la pièce à usiner (12).

7. Procédé selon la revendication 1, **caractérisé en ce que** le fait de combiner le rayon laser (17) de l'installation laser (17) et l'arc électrique (24) de l'installation à arc électrique (18) permet de régler et de surveiller la tension d'arc ou le courant d'arc ou les deux à la fois.

8. Procédé selon la revendication 1, **caractérisé en ce que** le rayon laser (19) est utilisé en tant qu'aide à l'amorçage pour la création de l'arc électrique (24) ou du jet de gaz plasmagène (23).

9. Dispositif destiné à la réception de pièces à usiner pour une opération d'usinage effectuée dans la pièce à usiner (12) en vue de mettre en oeuvre le procédé selon l'une quelconque des revendications 1 à 8, avec une installation d'usinage qui comprend une installation laser (17) et une installation à arc électrique (18), dans lequel
- au moins une tête d'usinage (21) est prévue, laquelle est traversée par un jet de gaz plasmagène qui, partant de l'installation à arc électrique (18), est dirigé vers le point d'usinage (22) de la pièce à usiner (12), et **caractérisé en ce que**
- l'installation laser (17) génère un rayon ou plusieurs rayons laser (19) de telle sorte que, lors de l'utilisation dudit rayon ou desdits rayons laser (19) de l'installation laser (17), est/sont amené(s) par l'extérieur jusqu'au jet de gaz plasmagène (23), et ce juste devant le point d'usinage (22), et est/sont conduit(s) vers le point d'usinage (22) en coupant celui-ci, et
- le rayon laser (19) forme un canal dans le jet de gaz plasmagène (23) en vue d'augmenter la conductivité dudit jet de gaz plasmagène (23).

10. Dispositif selon la revendication 9, **caractérisé en ce que** le rayon laser (19) conduit vers le point d'usinage (22) et l'électrode (26) de l'installation à arc électrique (18) sont disposés l'un par rapport à l'autre de manière fixe dans la tête d'usinage (21).

11. Dispositif selon la revendication 9, **caractérisé en ce que** la tête d'usinage (21) peut être déplacée par un manipulateur mono-axe ou multiaxe et **en ce que** de préférence la tête d'usinage (21) peut être déplacée en direction x et y, le long de la pièce à usiner (12) reposant sur un dispositif de réception (14), et qu'elle est logée de manière à être déplaçable en particulier en direction z ou de manière à pouvoir pivoter autour d'au moins un des trois axes de l'espace.

12. Dispositif selon la revendication 9, **caractérisé en ce que** l'électrode (26) de l'installation à arc électrique (18) est disposée de manière contiguë à une ouverture de buse (29) ou à l'intérieur de l'ouverture de buse (29) de la buse à gaz plasmagène et **en ce que** de préférence l'ouverture de buse (29) du jet de gaz plasmagène (23) est disposée à l'intérieur de l'ouverture de buse (30) du gaz enveloppe.

13. Dispositif selon la revendication 9, **caractérisé en ce que** la tête d'usinage (21) présente une ouverture de buse (29) formant le jet de gaz plasmagène (23) et située près de l'ouverture (28) de l'électrode (26) de l'installation à arc électrique (18) laquelle est formée en particulier par l'électrode annulaire, et **en ce qu'**une buse à gaz enveloppe (32) est prévue de préférence de manière coaxiale à l'ouverture de buse (29) du jet de gaz plasmagène (23) en vue de délivrer un gaz enveloppe.

14. Dispositif selon la revendication 9, **caractérisé en ce qu'**il est prévu d'amener par l'extérieur un rayon ou plusieurs rayons laser (19) jusqu'au jet de gaz plasmagène (23) en vue de générer le canal, et ce selon un angle aigu inférieur à 15°, de préférence inférieur à 10°, et en particulier inférieur à 5°, formé entre le jet de gaz plasmagène (23) et le rayon ou les rayons laser (19), avec un point d'intersection commun au niveau du point d'usinage (22).
